# EUROPÄISCHE PATENTSCHRIFT

(11) **EP 1 457 380 B1**
(45) Veröffentlichungstag und Bekanntmachung des Hinweises auf die Patenterteilung: **10.12.2008**
(21) Anmeldenummer: 04090104.3
(22) Anmeldetag: 11.03.2004
(51) Int. Cl.: B60N 2/30, B60N 2/36

(54) **Sitzanordnung für ein Kraftfahrzeug sowie Kraftfahrzeugsitz**
Seat arrangement for an automotive vehicle and automotive vehicle seat.
Disposition de siège pour un véhicule automobile ainsi que siège pour véhicule automobile.

(30) Priorität: 11.03.2003 DE 10311670
(43) Veröffentlichungstag der Anmeldung: 15.09.2004
(73) Patentinhaber: Volkswagen Aktiengesellschaft, 38436 Wolfsburg (DE)
(72) Erfinder: Bartels, Heiko, 38444 Wolfsburg (DE); Engel, Michael, 38518 Gifhorn (DE); Kruppa, Ralf, 08060 Zwickau (DE); Thomas, Udo, 67373 Dudenhofen (DE)
(74) Vertreter: Schneider, Henry

(56) Entgegenhaltungen:
- DE-A- 4 029 605
- DE-A- 19 950 165
- DE-C- 19 821 396
- DE-C- 19 841 363
- DE-C- 19 962 424
- FR-A- 1 452 002
- US-A- 5 409 264
- US-A- 5 492 386
- US-B1- 6 293 603

## Beschreibung

Die Erfindung betrifft eine Sitzanordnung für ein Kraftfahrzeug.

Es ist bekannt, Kraftfahrzeugsitze mit klappbaren Rückenlehnenteilen und absenkbaren Sitzteilen auszustatten, wobei das Rückenlehnenteil zur Schaffung von im Wesentlichen ebenen Flächen, insbesondere Ladeflächen, auf das Sitzteil klappbar ist

Ein derartiger Kraftfahrzeugsitz ist beispielsweise aus der DE 198 41 363 bekannt. Dieser Kraftfahrzeugsitz weist eine klappbare Rückenlehne und ein absenkbares Sitzteil auf, wobei die Rückenlehne zur Schaffung einer Ladefläche auf das Sitzteil klappbar und sich das Sitzteil beim Vorklappen der Rückenlehne absenkt und relativ zur Klappachse der Rückenlehne nach vorn verlagert, wobei sich das in seiner Gebrauchslage gegen Absenken arretierte Sitzteil in seinem vorderen Bereich auf eine direkt oder indirekt am Fahrzeugboden gelagerte, längs schwenkbare Schwinge abstützt. Das Sitzteil ist in seinem hinteren Bereich direkt oder indirekt am Fahrzeugboden längs verschiebbar geführt, wobei die Rückenlehne und die Schwinge durch ein starkes Koppelglied miteinander verbunden sind, welches an seinem einen Ende unterhalb der Klappachse der Rückenlehne mit letzterer verbunden ist. An seinem anderen Ende ist das Koppelglied als Zahnstange ausgebildet, die mit einem drehfest auf der unteren Drehachse der Schwinge sitzenden Zahnrad kämmt, wobei das Koppelglied die Lehnenklappbewegung nach dem Lösen der Arretierung des Sitzteiles auf die Schwinge überträgt, wodurch diese nach vorn schwenkt und das Sitzteil absenkt sowie nach vorn verlagert. Die Rückenlehne und das Sitzteil sind somit über ein starres Koppelglied verbunden. Insgesamt weist die Konstruktion in nachteiliger Weise zur Realisierung der Klappbewegung von Rückenlehne und Sitzteil eine aufwendige, konstruktive Lösung auf.

Aus der DE 199 62 424 C2 geht eine andere Konstruktion für einen Kraftfahrzeugsitz hervor, der eine um eine Klappachse klappbare Rückenlehne sowie ein über seinen vorderen Bereich über eine längs verschwenkbare Schwinge abgestütztes Sitzteil aufweist, wobei die Klappbewegung der Rückenlehne über das Gestänge auf die Schwinge übertragen wird, so dass sich das Sitzteil durch Verschwenken der Schwinge beim Nachvorneklappen der Rückenlehne absenkt und beim Zurückklappen der Rückenlehne wieder aufrichtet. Die Übertragung der Stellbewegung von der klappbaren Rückenlehne auf die Schwinge des Sitzteiles erfolgt hier über ein aus einer ersten und zweiten Stange bestehendes Gestänge, wobei ebenfalls eine aufwendige Konstruktion benötigt wird.

Bekannt ist ferner, den geklappten Sitz auf die Karosserie beziehungsweise in eine in der Karosserie angeordnete Vertiefung möglichst tief zu versenken, um einen möglichst tief liegenden Ladeboden auf der Rückseite des Sitzteiles oder des Rückenlehnenteiles des Kraftfahrzeugsitzes auszubilden. Dieser Ladeboden schließt sich zumeist an den Ladegutraum des Kraftfahrzeuges an und soll mit dem Ladegutraum eine möglichst große und tief liegende Fläche bilden.

Eine solche Lösung für einen Kraftfahrzeugsitz offenbart bereits die FR 1 452 002 A. Der Kraftfahrzeugsitz ist direkt oder indirekt über mindestens ein bewegliches Befestigungsmittel mit einer Karosserie verbunden. Der Kraftfahrzeugsitz weist sowohl ein Sitzteil, als auch ein Rückenlehnenteil auf, welches zur Schaffung einer im Wesentlichen ebenen Fläche auf das absenkbare Sitzteil klappbar ist, wobei das Sitzteil beim Klappen relativ zu einer Klappachse des Rückenlehnenteiles verlagerbar ist. Aus der FR 1 452 002 A ist ebenfalls ein Art Schwinge entnehmbar, die einerseits mit dem Rückenlehnenteil und andererseits mit dem Sitzteil des Kraftfahrzeugsitzes verbunden ist. Diese Schwinge ist mit dem Rückenlehnenteil drehbar und an dem Sitzteil starr angeordnet. Durch ein Klappen des Rückenlehnenteiles von der Gebrauchs- in die Nichtgebrauchsstellung über mindestens eine Drehachse ist ein vertikale und horizontale Bewegung des Sitzteiles gegenüber dem Karosserieboden in eine dafür vorgesehene Vertiefung durchführbar.

Die mögliche Tiefe der Versenkung des klappbaren Sitzes ist von der Tiefe der Boden-Karosserie abhängig. Die Sitze sind jedoch gerade in der Fondsitzreihe aufgrund unterhalb der Karosserie liegender Bauteile des Kraftfahrzeuges, wie beispielsweise dem Tank und/oder dem Schalldämpfer, nur bis zur Boden-Karosserie absenkbar. Diese Abhängigkeit der Sitzanordnung von diesen Randbedingungen ist nachteilig für insgesamt gewünschte möglichst tief liegende Anordnungen von Kraftfahrzeugsitzen. Eine Verlegung von Bauteilen unterhalb der Karosserie zur Schaffung zusätzlichen Bauraumes in Richtung des Karosseriebodens, beispielsweise in den hinteren Bereich des Kraftfahrzeuges muss gut überlegt sein, da dann die Notwendigkeit besteht, wegen möglicher Heckcrashs die Bauteile insbesondere den Tank entsprechend zu schützen. Einen Vorschlag zum Schutz eines Tankes, der im hinteren Bereich eines Kraftfahrzeug angeordnet ist, macht die Offenlegungsschrift DE 40 29 605 A1. Dort wird beschrieben, dass der Tank in einem vor einem Crash gesicherten "Y-förmigen" Bereich ausgebildet ist, wobei der geschützte Tank durch eine Hinterachse, einen Längsquerträger und einen Querträger begrenzt wird. Die beschriebene direkte Anbindung des Querträgers an das Ausgleichsgetriebe der Hinterachse und ein hier im Crashfall auftretender punktueller Krafteintrag ist jedoch von Nachteil.

Die Kombination eines möglichst flach faltenden Kraftfahrzeugsitzes und die Anordnung eines solchen Kraftfahrzeugsitzes auf einer Karosserie, im Bereich der Klappzone des flach faltenden Sitzes, der in Nichtgebrauchsstellung möglichst tief im Kraftfahrzeug anordbar ist, stellt die Aufgabe der vorliegenden Erfindung dar.

Der Erfindung liegt die somit Aufgabe zu Grunde sicher zustellen, dass Kraftfahrzeugsitze und/oder Sitzanordnungen eines Kraftfahrzeuges bei der Überführung von einer Gebrauchsstellung in eine Nichtgebrauchsstellung möglichst unter Ausbildung eines ebenen und tiefliegenden Ladebodens in eine Karosserie des Kraftfahrzeuges hinein bewegbar sind.

Die Lösung der Aufgabe erfolgt durch eine Sitzanordnung für ein Kraftfahrzeug mit mindestens einem Kraftfahrzeugsitz mit den kennzeichnenden Merkmalen des Anspruches 1.

Die Erfindung geht von einer Sitzanordnung für ein Kraftfahrzeug mit mindestens einem Kraftfahrzeugsitz, der ein Rückenlehnenteil und ein Sitzteil umfasst, der aus einer Gebrauchsstellung in eine Nichtgebrauchsstellung in eine Ausnehmung eines Karosseriebodens bewegbar ist aus, wodurch ein zu einem horizontalen Fahrbahnniveau in einem ersten Abstand angeordneter, im Wesentlichen ebener Gesamtladeboden aus einer ersten Fläche des Sitzteiles oder des Rückenlehnenteiles und einer im Wesentlichen ebenen Fläche eines ersten Ladebodens in einem ersten Abstand zu einem horizontalen Fahrbahnniveau ausbildbar ist.

Erfindungsgemäß ist vorgesehen, dass durch eine Anordnung von Bauteilen unterhalb des Karosseriebodens in den vor einem Crash gesicherten "U-förmigen Bereich" einer Hinterachse, der aus karosserieseitig angeordneten Längs- und Sitzquerträgern des Kraftfahrzeuges gebildet ist, mindestens ein flach faltender Kraftfahrzeugsitz in seine Nichtgebrauchsstellung in eine, in einem Bereich des Karosseriebodens ausbildbare tiefere Ausnehmung klappbar ist, wodurch ein im Wesentlichen ebener Gesamtladeboden aus der dann tiefer angeordneten ersten horizontalen Fläche des Sitzteiles oder des Rückenlehnenteiles und einem zweiten tieferen Ladeboden in einem zweiten geringeren Abstand zu dem horizontalen Fahrbahnniveau ausbildbar ist.

In bevorzugter Ausgestaltung der Erfindung sind die Bauteile, beispielsweise ein Tank und/oder ein Endschalldämpfer, in den gesicherten Bereich der Hinterachse des Kraftfahrzeuges verlegt. Die Hinterachse ist bevorzugt unterhalb der Karosserie als ein Verbundlenker aus mindestens zwei Achsaufhängungen, von denen jeweils seitliche Radlenker ausgehen und zu den Felgen der Räder verlaufen, und der Hinterachse selbst, die zwischen den Radlenkern angeordnet ist, wobei diese Verbundlenker-Hinterachse einen crashsicheren Bereich in der Form eines "U" ausbildet. Tank und/oder Endschalldämpfer liegen nach der Verlagerung innerhalb dieses "U" und sind somit geschützt. Bevorzugt ist, dass eine Hinterkante-Felge des Rades und eine Hinterkante-Tank in einer Flucht angeordnet sind, wodurch crashbedingte Kräfte auf die Hinterkante-Felge treffen und über die Hinterkante-Felge in den Verbundlenker eingeleitet werden und die Bauteile, die innerhalb des "U" angeordnet sind, vor Deformation schützen.

Weiterhin wird der Verbundlenker im Wesentlichen unterhalb eines Sitzquerträgers (Karosserieteil), der mit den jeweils seitlich angeordneten Längsträgern (Karosserieteil) verbunden ist und an denen ferner an der Hinterkante des Kraftfahrzeuges ein Stoßfänger angeordnet ist, ausgebildet, so dass auch die Karosserie neben dem Verbundlenker den crashsicheren Bereich in Form eines weiteren "U" für anordbare Bauteile ausbildet.

Durch die Verlagerung der Bauteile Tank und/oder Endschalldämpfer ist in bevorzugter Ausgestaltung der Erfindung in dem Bereich, in dem vorher Tank beziehungsweise Endschalldämpfer unterhalb des Karosseriebodens angeordnet waren, ein Fersenblech in der nun tieferen ausbildbaren Ausnehmung im Fahrzeug weiter hinten anordbar, wodurch ein Kraftfahrzeugsitz tiefer und weiter hinten anordbar und auch tiefer versenkbar ist, als in einer bekannten vergleichbaren Ausnehmung aus dem Stand der Technik.

Weitere bevorzugte Ausgestaltungen der Erfindung ergeben sich aus den übrigen, in den Unteransprüchen genannten Merkmalen.

In eine solche erfindungsgemäße tiefere Ausnehmung kann eine Sitzanordnung untergebracht werden, bei der eine zweite Sitzreihe zwei symmetrische Sitze und eine dritte Sitzreihe zwei asymmetrische geteilte Sitze umfasst und jeder Sitz unabhängig von den anderen Sitzen durch reversible Klappung des Rückenlehnenteiles und einem zwangsgekoppelten Sitzteil über einen Schwenkmechanismus ein im Wesentlichen ebener Gesamtladebodens aus der ersten horizontalen Fläche des jeweiligen Rückenlehnenteiles und dem zweiten tieferen Ladeboden in der tieferen Ausnehmung des Karosseriebodens in dem zweiten geringeren Abstand zu dem horizontalen Fahrbahnniveau ausbildbar ist.

Eine solche Sitzanordnung mit mindestens einem Kraftfahrzeugsitz weist beispielsweise mindestens eine Schwinge auf, die einerseits an dem mit einer Karosserie verbundenen Rückenlehnenteil-Rahmen des Rückenlehnenteiles drehbar und andererseits an einem Sitzteil-Rahmen eines Sitzteiles starr angeordnet ist, wodurch gleichzeitig bei einem einhandbedienbaren Klappen des Rückenlehnenteiles von einer Gebrauchsstellung in eine Nichtgebrauchsstellung über mindestens eine Drehachse eine vertikale und horizontale Bewegung des Sitzteiles gegenüber der Karosserie durchführbar ist.

Dieser Kraftfahrzeugsitz kann in vorteilhafter Weise unter Ausbildung des im Wesentlichen ebenen Gesamtladebodens, der aus der ersten horizontalen Fläche des jeweiligen Rückenlehnenteiles des Kraftfahrzeugsitzes und dem zweiten tieferen Ladeboden in der tieferen Ausnehmung des Karosseriebodens in dem zweiten geringeren Abstand zu dem horizontalen Fahrbahnniveau ausgebildet ist, in den vorgenannten Sitzanordnungen vorteilhaft zum Einsatz kommen.

Bei einem solchen Kraftfahrzeugsitz ist vorgesehen, dass die Schwinge beim Klappen des Rückenlehnenteiles eine zwangsgesteuerte Bewegung des Sitzteiles hervorruft. Die Schwinge ist vorzugsweise beidseitig angeordnet und ist an einem ersten Befestigungspunkt am Rückenlehnenteil-Rahmen auf einer zweiten Drehachse drehbar angeordnet. Ferner ist die Schwinge an einem zweiten Befestigungspunkt am Sitzteil-Rahmen starr angeordnet. Das Rückenlehnenteil ist über ein Befestigungsmittel am Rückenlehnenteil-Rahmen drehbar auf einer ersten Drehachse relativ zur Karosserie verlagerbar und mit der Karosserie fest verbunden. Das Sitzteil weist mindestens ein vorderes Bein auf, welches als Befestigungsmittel am Sitzteil-Rahmen drehbar auf einer dritten Drehachse relativ zur Karosserie verlagerbar und mit der Karosserie über eine vierte Drehachse drehbar verbunden ist. Durch diese Ausbildungen ist das Rückenlehnenteil auf der ersten Drehachse relativ zur Karosserie und das Sitzteil auf der vierten Drehachse relativ zur Karosserie flach faltend per Einhandbedienung verlagerbar.

Eine andere Sitzanordnungs-Lösung ist ebenfalls in eine erfindungsgemäße tiefere Ausnehmung bewegbar. Diese Sitzanordnung ist über eine längsverschiebliche und reversible Verlagerung mindestens eines Sitzes der Sitzanordnung durch ein Schiebesystem auf einer ersten, im Wesentlichen horizontalen Ebene und nach Schwenken des mindestens einen Sitzes der Sitzanordnung durch eine Schwenkvorrichtung um mindestens eine quer zur Fahrtrichtung verlaufende Drehachse auf eine zweite horizontale Ebene durchführbar, wodurch die Sitzanordnung in Abhängigkeit von der gewählten Schiebe-/Schwenkbewegung des mindestens einen Sitzes der Sitzanordnung ebenfalls der im Wesentlichen ebene Gesamtladeboden aus der ersten horizontalen Fläche des Rückenlehnenteiles und dem zweiten tieferen Ladeboden in der tieferen Ausnehmung des Karosseriebodens in einem zweiten geringeren Abstand zu dem horizontalen Fahrbahnniveau ausbildbar ist. Bei diesem innerhalb dieser Sitzanordnung zum Einsatz kommenden Kraftfahrzeugsitz ist die Klappung des Rückenlehnenteiles unabhängig von der Klappung des Sitzteiles gemeinsam mit dem Rückenlehnenteil durch die Schiebe-/Schwenkbewegung durchführbar.

Auch für diese Sitzanordnung ist vorgesehen, dass die Sitze ebenfalls einhandbedienbar sind. Das Schiebesystem ist vorzugsweise als ein Schienensystem, als zwei seitliche Schienen am jeweiligen Sitzteil-Rahmen eines linken, rechten und mittleren Sitzes ausgebildet. Eine Schwenkvorrichtung ermöglicht, dass der Sitzteil-Rahmen und die jeweils seitlich angeordneten Schienen in eine zweite horizontale Ebene verlagerbar sind. Die Schwenkvorrichtung ist eine Art Viergelenk, wobei die Schwenkvorrichtung insgesamt vorzugsweise eine vier Streben umfassende Unterkonstruktion und die Viergelenke umfasst, und diese strebenartige Unterkonstruktion wahlweise am Sitzteil-Rahmen oder an den seitlichen Schienen angreift.

Ferner ermöglicht diese Sitzanordnung, durch das Klappen mindestens eines Rückenlehnenteiles mindestens eines Sitzes mindestens eine Komfortfunktion auszubilden. So ermöglicht das Klappen des Rückenlehnenteiles des mittleren Sitzes einen mittleren Klapp-Tisch auszubilden, oder durch die Schiebe-/Schwenkbewegung des mittleren Sitzes ist eine Durchladefunktion zwischen dem linken und rechten Sitz ausbildbar.

Die Erfindung wird nachfolgend in Ausführungsbeispielen anhand der zugehörigen Zeichnungen erläutert. Es zeigen:
- Figur 1A: eine Seitenansicht einer Hinterachse eines Kraftfahrzeuges mit einem in dem Bereich der Hinterachse angeordneten Tank;
- Figur 1B: eine schematische Seitenansicht des Tanks zwischen der Hinterachse und im Vergleich dazu die schematische Seitenansicht des Tanks unterhalb einer Sitzreihe;
- Figur 1C: eine Unteransicht auf den im Bereich der Hinterachse angeordneten Tank;
- Figur 1D: eine Draufsicht mit Detaildarstellung des im Bereich der Hinterachse angeordneten Tanks;
- Figur 1E: eine Karosserieanordnung in Bezug auf die Figuren 1A bis 1D als Vergleich der Anordnung des Tankes zwischen Hinterachse und unterhalb der Sitzreihe;
- Figur 2A: eine Seitenansicht eines in eine erfindungsgemäß geschaffene tiefere Ausnehmung bewegbaren Kraftfahrzeugsitzes einer Sitzanordnung mit einem schwingenartigen Verbindungselement zwischen Rückenlehnenteil und Sitzteil für einen versenkbaren Kraftfahrzeugsitz in Gebrauchsstellung;
- Figur 2B: eine Seitenansicht der Sitzanordnung nach Figur 2A in beginnender Klappbewegung von der Gebrauchsstellung in eine Nichtgebrauchsstellung;
- Figur 2C: eine Seitenansicht der Sitzanordnung nach Figur 2A in fast vollständig durchgeführter Klappbewegung von der Gebrauchsstellung in die Nichtgebrauchsstellung;
- Figur 2D: eine Seitenansicht der Sitzanordnung nach Figur 2A in Nichtgebrauchsstellung mit ebenem Ladeboden;
- Figur 3A: eine perspektivische Ansicht eines in eine erfindungsgemäß geschaffene tiefere Ausnehmung bewegbaren Kraftfahrzeugsitzes einer Sitzanordnung mit einem Sitzunterbau als Sitzschienen-/Schwenk-Kombination in Gebrauchsstellung;
- Figur 3B: eine perspektivische Ansicht der Sitzanordnung nach Figur 3A mit Sitzunterbau als Sitzschienen-/Schwenk-Kombination in Gebrauchsstellung mit auf der Sitzschiene in Fahrtrichtung verschobenem mittleren Fahrzeugsitz;
- Figur 3C: eine perspektivische Ansicht einer Sitzanordnung nach Figur 3A mit einem Sitzunterbau als Sitzschienen-/Schwenk-Kombination in Gebrauchsstellung, jedoch ohne Polsterung in einer Grundstruktur;
- Figur 3D: eine perspektivische Ansicht der Sitzanordnung nach Figur 3A mit einem Sitzunterbau als Sitzschienen-/Schwenk-Kombination in Nichtgebrauchsstellung, ohne Polsterung in seiner Grundstruktur;
- Figur 3E: eine perspektivische Draufsicht auf einen gemäß der Erfindung tiefer liegenden ebenen Ladeboden in Nichtgebrauchsstellung der geklappten Sitze gemäß Sitzanordnung Figur 3D;
- Figur 3F: eine Komfortfunktion eines mittleren Sitzes der Sitzanordnung gemäß Figur 3A bis 3E bei geklapptem Rückenlehnenteil als Tischfunktion;
- Figur 3G: eine Komfortfunktion durch Schwenkfunktion des mittleren Sitzes der Sitzanordnung gemäß Figur 3A bis 3E als Ablage mit erhöhtem Bewegungsfreiraum für die Kraftfahrzeuginsassen;
- Figur 3H: eine Komfortvariante der Sitzanordnung für Beladungsgegenstände bei Klappfunktion des mittleren Sitzteiles;
- Figur 4A: eine Sitzanordnung unter Ausbildung eines erfindungsgemäß tiefer liegenden Ladebodens für ein mehrsitziges Kraftfahrzeug mit mindestens drei Sitzreihen;
- Figur 4B: eine Sitzanordnung mit schematischer Darstellung der Klappfunktion der zweiten und dritten Sitzreihe und Vergleich des ersten Ladebodens nach dem Stand der Technik und des tiefer liegenden Ladebodens gemäß der Erfindung und
- Figur 4C: eine perspektivische Seitenansicht der Sitzanordnung mit einer Klapp-/Schwenk-Kombination in Gebrauchsstellung und bei einer Klappung von einer Gebrauchsstellung in eine Nichtgebrauchsstellung am Beispiel einer zweiten Sitzreihe zur Ausbildung eines gemäß der Erfindung tiefer liegenden Ladebodens.

Nachfolgend soll die Erfindung anhand der Figuren in Ausführungsbeispielen verdeutlicht werden.

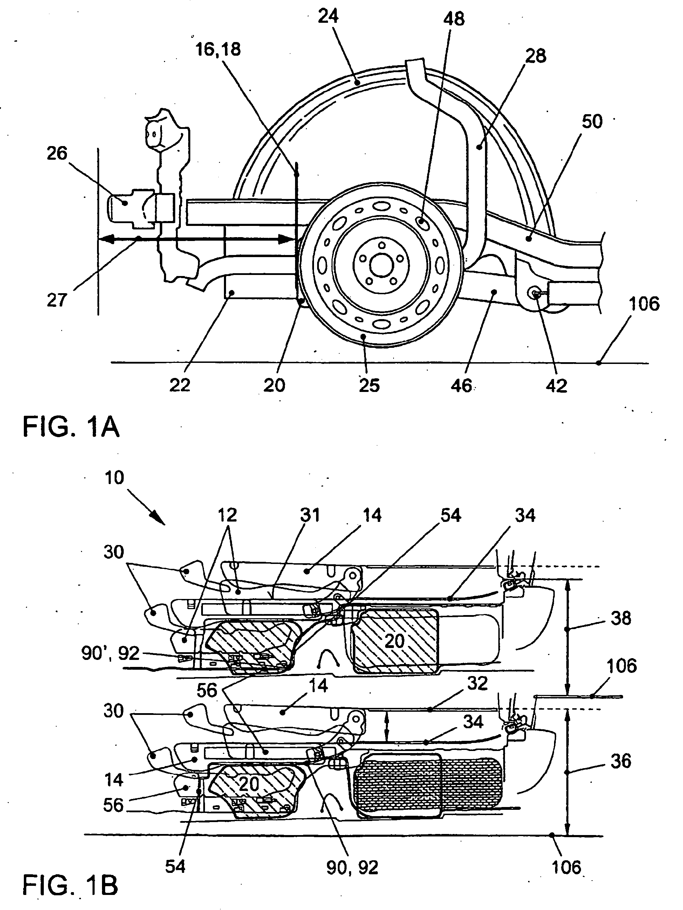

Figuren 1A bis 1E zeigen verschiedene Ansichten einer Sitzanordnung.

Figur 1A zeigt in einer Seitenansicht den Bereich einer Hinterachse 44 eines Kraftfahrzeuges, wobei die Hinterachse 44 in dieser Darstellung nicht sichtbar ist. Im hinteren Bereich der Figur 1A ist ein Radhaus 24 dargestellt. Das vordere Radhaus 24 ist zur Verdeutlichung der Details nicht dargestellt. Dadurch wird eine Felge 25 eines Rades vollständig sichtbar. Hinter der Felge 25 ist unterhalb einer Karosserie ein Längsträger 50 und ein Endschalldämpfer 22 angeordnet. Ein Tank 20 ist ebenfalls unterhalb des Längsträgers 50 direkt hinter der Felge 25 nicht sichtbar angeordnet. Der Längsträger 50 läuft heckseitig in einen Stoßfänger 26 aus. Rechts der Felge 25 ist ein Tankeinfüllstützen 28 angeordnet, der von dem Tank 20 ausgehend zu einem Einfüllstutzen verlegt ist. Die Figur 1A zeigt ferner, dass das Kraftfahrzeug auf einem Fahrbahnniveau 106 als horizontale Bezugslinie steht. Die nicht sichtbare Hinterachse 44 weist einen Radlenker 46 auf, der zum einen an der Felge 25 und zum anderen an einer sichtbaren Achsaufhängung 42 angelenkt ist. Ein Stoßdämpfer 48 ist ebenfalls hinter der Felge 25 liegend zwischen dem Karosserieboden, vorzugsweise dem Längsträger 50 und der Hinterachse 44 angeordnet.

Erfindungsgemäß ist eine Hinterkante-Felge 16 und eine Hinterkante-Tank 18 in der Seitenansicht auf einer vertikalen Linie fluchtend angeordnet. Aus Figur 1A wird bereits sichtbar, dass der Tank 20 und der Endschalldämpfer 22 im Bereich der Hinterachse 44 angeordnet ist. Die Hinterkante-Felge 16 und die Hinterkante-Tank 18 bis zur Hinterkante des Fahrzeuges ist ein kurzer Überhang 27, der zirka 465 mm beträgt.

Die Verlegung des Tankes 20 und des Endschalldämpfers 22 in den hinteren Bereich wird in Figur 1B im Vergleich zum Stand der Technik näher erläutert. Insbesondere wirkt diese Verlegung dahin, dass entgegen dem bisherigen Stand der Technik der Tank 20 und/oder der Endschalldämpfer 22 unterhalb des Sitzbereiches ein Spielraum für die Absenkung des Karosseriebodens 92 möglich ist.

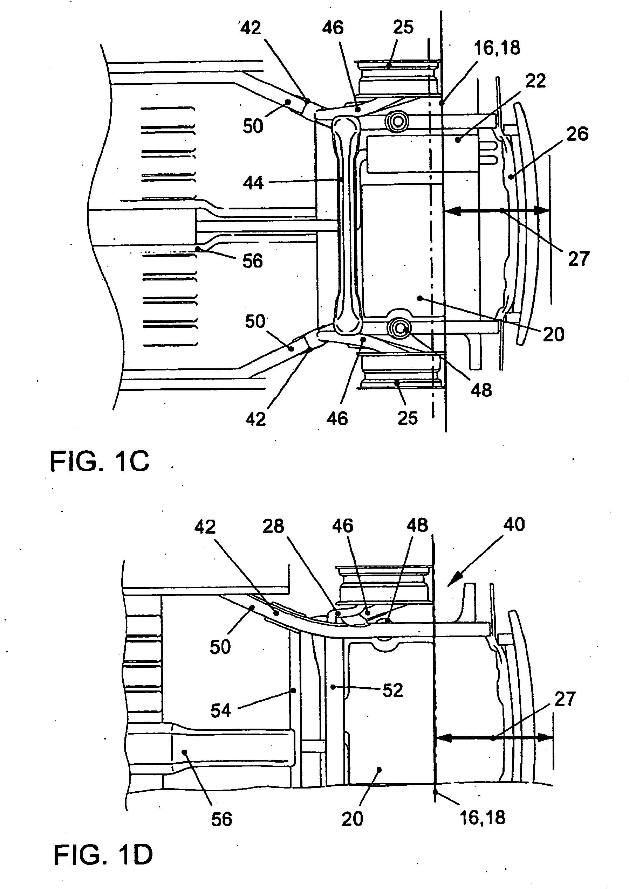

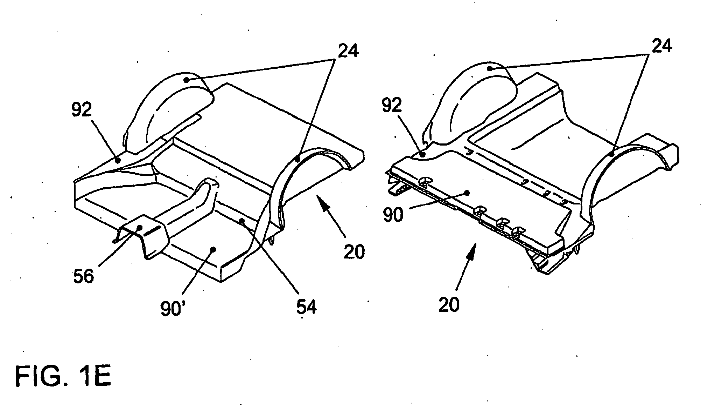

Dazu siehe Figur 1B, bei der das Heck des Kraftfahrzeuges rechts in der Figur dargestellt ist, wobei in Figur 1 das Heck links dargestellt ist.

Figur 1B zeigt die Sitzanordnung, die in der oberen erfindungsgemäßen Darstellung der Figur 1B in eine tiefere Ausnehmung 90' eines Karosseriebodens 92 geklappt gezeigt ist, wobei die tiefere Ausnehmung 90' gegenüber der unteren Zeichnung der Figur 1B durch Verlegung des Tankes 20 und des Endschalldämpfers 22 in den Bereich der Hinterachse 44 in einem geringeren zweiten Abstand 38 zu dem horizontalen Fahrbahnniveau 106 angeordnet ist.

Die untere Zeichnung der Figur 1B zeigt, dass bei konventioneller Anordnung (Stand der Technik) des Tankes 20 beziehungsweise des Endschalldämpfers 22 unterhalb des Karosseriebodens 92 eine vergleichbare tiefe Ausnehmung 90, wie in der oberen Darstellung zur Verlagerung eines Sitzes beziehungsweise einer Sitzanordnung an dieser Stelle nicht möglich ist.

Gleichzeitig verdeutlicht Figur 1B, dass bei der bisherigen konventionellen Lösung ein erster Abstand 36 eines ausbildbaren ersten Ladebodens 32 gegenüber dem nicht näher dargestellten horizontalen Fahrbahnniveau 106 größer ist, als eine mögliche Ausbildung eines zweiten Ladebodens 34 bei Verlagerung des Tankes 20 und/oder des Endschalldämpfers 22 zwischen die Hinterachse 44 unter Ausbildung einer tieferen Ausnehmung 90'.

Die Differenz der zweiten Ladebodenhöhe 34 zwischen dem zweiten Abstand 38 - zirka 550 mm - ausgehend von dem Fahrbahnniveau 106 zu der möglichen realisierbaren ersten Ladebodenhöhe 32 der konventionellen Lösung in einem ersten Abstand 36 - zirka 610 mm - von der dem Fahrbahnniveau 106 und der erfindungsgemäßen Lösung entspricht einer gewinnbaren tieferen Ladebodenhöhe von 60 mm durch die erfindungsgemäße Lösung.

Der jeweilige, beispielhaft dargestellte Kraftfahrzeugsitz 10 ist durch sein Rückenlehnenteil 14 und sein Sitzteil 12 und eine am Rückenlehnenteil 14 angeordnete Kopfstütze 30 dargestellt. Der jeweils in der oberen und unteren Darstellung der Figur 1B gezeigte untere Kraftfahrzeugsitz 10 entspricht der tieferen Anordnung der erfindungsgemäßen Lösung. Die jeweils obere Darstellung zeigt die Anordnung nach dem Stand der Technik. Eine horizontal angeordnete Rückseite 31 des Rückenlehnenteiles 14 verlängert den jeweiligen Ladeboden 32, 34 zu einem Gesamtladeboden aus Rückseite 31 des Rückenlehnenteiles 14 wie im Ausführungsbeispiel oder auch durch ein Sitzteil 12 - durch andere Klappvarianten - und der weiteren Ladebodenfläche 32, 34.

Figur 1C zeigt eine Unteransicht auf den im Bereich der Hinterachse 44 angeordneten Tank 20. In der Ansicht von unten ist die Anordnung des Tankes 20, beispielsweise ein 50-Liter-Tank, im Bereich der Hinterachse 44 in einem gesicherten Bereich dargestellt.

Der gesicherte Bereich liegt zwischen der in dieser Figur sichtbaren Hinterachse 44 und den beidseitig zur Felge 25 führenden Radlenkern 46 - bilden eine Art Verbundlenker aus. Zudem sichtbar ist hier der Stoßdämpfer 48.

Der Radlenker 46, der an der Achsaufhängung 42 am Längsträger 50 aufgehängt ist, und die Hinterachse 44 bilden ein "U" aus, welches bis zu den Felgen 25 geführt ist. Die Hinterkante-Felge 16 und die Hinterkante-Tank 18 bilden in dieser Unteransicht eine Flucht aus, so dass im Crashfall eingeleitete Kräfte über das Rad beziehungsweise deren Felge 25 in die Radlenker 46 auf die Achsaufhängung 42 in die Karosserie, insbesondere den Längsträger beziehungsweise in die Hinterachse 44 eingeleitet werden. Der Tank 20 und/oder der Endschalldämpfer 22 liegen somit in einem gesicherten Bereich. In der Unteransicht ist wiederum der Überhang 27 zwischen Hinterkante-Felge 16 beziehungsweise Hinterkante-Tank 18 und dem Stoßfänger 26 sichtbar.

Ein weiteres ausgebildetes gedachtes "U" ist in der Figur 1D dargestellt. Figur 1D zeigt erfindungsgemäß weitere detaillierte Ausbildungen der Erfindung, wie zum Beispiel die Anordnung eines Fersenbleches 54 gegenüber einem Sitzquerträger 52 und die Anordnung des Längsträgers 50 der Fahrzeugkarosserie, und in weiterer bevorzugter Ausgestaltung der Erfindung eine reduzierte Tunnelkontur 56, die auch ein tiefes Klappen der Sitzanordnung, insbesondere im Mittelbereich, ermöglicht. Eingeleitete Kräfte in den Stoßfänger 26 werden über den Karosserieboden 92, insbesondere den Längsträger 50 und den Sitzquerträger 52 aufgenommen, wodurch ebenfalls ein gesicherter Bereich für Tank 20 und Endschalldämpfer 22 ausgebildet ist. Die weiteren Bezugszeichen und dargestellten Bauteile entsprechen den bisherigen Figuren.

Figur 1E zeigt im linken Bild eine mögliche Ausbildung des Karosseriebodens 92, insbesondere des Bodenbleches bei Anordnung des Tankes 20 zwischen der Hinterachse 44 und im rechten Bild bei Anordnung des Tankes 20 unterhalb der Sitzreihe beziehungsweise der Sitzanordnung in konventioneller Ausführung. Aus Figur 1E wird deutlich, dass die Position des Fersenbleches 54 der tieferen Ausnehmung 90' in Bezug auf die Fahrzeuglängsrichtung deutlich weiter hinten und vor allem tiefer ausbildbar ist, als im Vergleich zu der Ausnehmung 90 der konventionellen Sitzanordnung. Die weiteren Bezugszeichen entsprechen den Figuren 1A bis 1D. Sichtbar ist zudem die sich innerhalb der Ausnehmung 90' angeordnete Tunnelkontur 56, die aber erfindungsgemäß möglichst reduziert ausgeführt ist, um einen Kraftfahrzeugsitz 10 möglichst tief auf den Karosserieboden 92 klappen zu können.

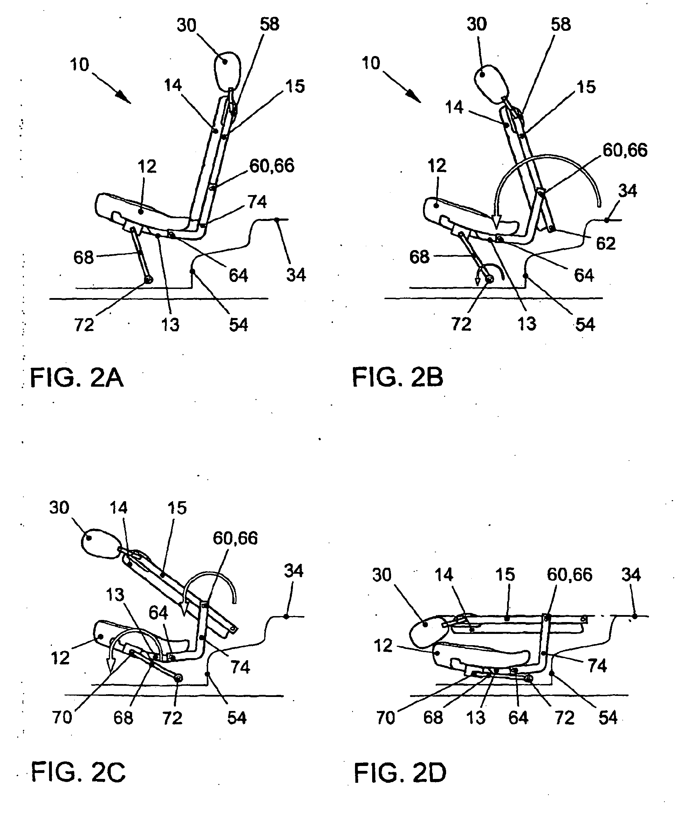

Figuren 2A bis 2D zeigen jeweils in einer sequenzartigen Seitenansicht einen beispielhaft dargestellten Kraftfahrzeugsitz 10 mit einem schwingenartigen Verbindungselement zwischen Rückenlehnenteil 14 und Sitzteil 12 der in eine tiefere Ausnehmung 90' bewegbar ist und der selbstverständlich auch als mehrsitzige Anordnung analog ausbildbar ist. Das Verbindungselement ist einerseits an einem Rückenlehnenteil-Rahmen 15 des Rückenlehnenteiles 14 drehbar und andererseits an einem Sitzteil-Rahmen 13 eines Sitzteiles 12 starr angeordnet.

Wie Figuren 2B und 2C zeigen, wird ein Klappen des Rückenlehnenteiles 14 von einer Gebrauchsstellung in eine Nichtgebrauchsstellung zunächst über eine erste Drehachse 62 des Rückenlehnenteils (unterer Drehpunkt Lehne) durchgeführt.

Dabei ist der untere Drehpunkt Lehne 62 direkt rohbaufest aber drehbar an einer Karosserie angeordnet. Die Befestigungsart der Lehne 14 an der Karosserie ist nicht näher dargestellt. Eine indirekte Befestigung über ein Verbindungsmittel - auch nicht dargestellt - ist ebenfalls ausführbar.

Vor Schwenkung des Rückenlehnenteiles ist, wie Figur 2A zeigt, eine obere Lehnenverrastung 58 zu entriegeln, damit das Rückenlehnenteil 14 von der Karosserie lösbar ist.

Durch Klappen des Rückenlehnenteiles 14 von der Gebrauchsstellung in eine Nichtgebrauchsstellung ist über die erste Klappachse 62 (unterer Drehpunkt Lehne) auch das Sitzteil 12 zwangsweise umklappbar. Das Verbindungsmittel, insbesondere die Schwinge 74 zwischen Rückeniehnenteil 14 und Sitzteil 12, ist an einem ersten Befestigungspunkt 60 am Rückenlehnenteil-Rahmen 15 auf einer zweiten Drehachse 66 - siehe Figur 2A bis 2D - (oberer Drehpunkt Sitzpolster in der Lehne) drehbar angeordnet.

Am Sitzteil-Rahmen 13 des Sitzteiles 12 ist die Schwinge 74 an einem zweiten Befestigungspunkt 64 starr angeordnet.

Das Sitzteil ist - wie die Figuren 2A bis 2D zeigen - über mindestens ein vorderes Bein (Bügel) 68 als Befestigungsmittel am Sitzteil-Rahmen 13 drehbar auf einer dritten Drehachse 70 (unterer Drehpunkt Sitzpolster im Bügel) relativ zum Karosserieboden 92 verlagerbar.

Durch Klappen des Rückenlehnenteiles 14 über die erste Drehachse 62 (unterer Drehpunkt Lehne) ist das Rückenlehnenteil 14 relativ zum Karosserieboden 92 gegenüber einer gedachten Vertikalachse und einer Horizontalachse verlagerbar.

Über das einzige Verbindungsmittel, die Schwinge 74, zwischen Rückenlehnenteil 14 und Sitzteil 12, ist das Sitzteil 12 über zweite, dritte Drehachse und vierte Drehachse 66, 70, 72 relativ zum Karosserieboden 92 gegenüber der Vertikalachse und der Horizontalachse verlagerbar. Dazu ist das Sitzteil 12 über den Bügel 68 (vorderes Bein) drehbar über die vierte Drehachse 72 drehbar mit dem Karosserieboden 92 verbunden. Von besonderer Bedeutung ist, dass die erste Drehachse 62 und die vierte Drehachse 72 auf unterschiedlichen Ebene angeordnet sind, wobei die Ebene der ersten Drehachse 62 auf der Höhe des zweiten Ladebodens 34 liegt. Die bei unterschiedlichen Fahrzeugtypen an in verschiedenen Höhen angeordneten Ebenen anpassbare Schwinge 74 ermöglicht, dass der Kraftfahrzeugsitz eine breite Anwendung findet.

Die Figuren verdeutlichen den besonderen Vorteil der erfindungsgemäßen Lösung. Neben der einfachen Einhandbedienung zum Klappen des Kraftfahrzeugsitzes ist zudem ein ebener, horizontaler, zweiter Ladeboden auf einem tiefen Ladebodenniveau in Kombination mit der ausgebildeten Ausnehmung 90', wie in den Figuren 1A bis 1E beschrieben, erreichbar. So ist in den Figuren 2A bis 2D vergleichsweise der zweite Ladeboden 34 dargestellt, der in der Figur 1B in dem zweiten vergleichsweise vom Stand der Technik ausgehenden geringeren Abstand 38 von dem Fahrbahnniveau 106 ausbildbar ist.

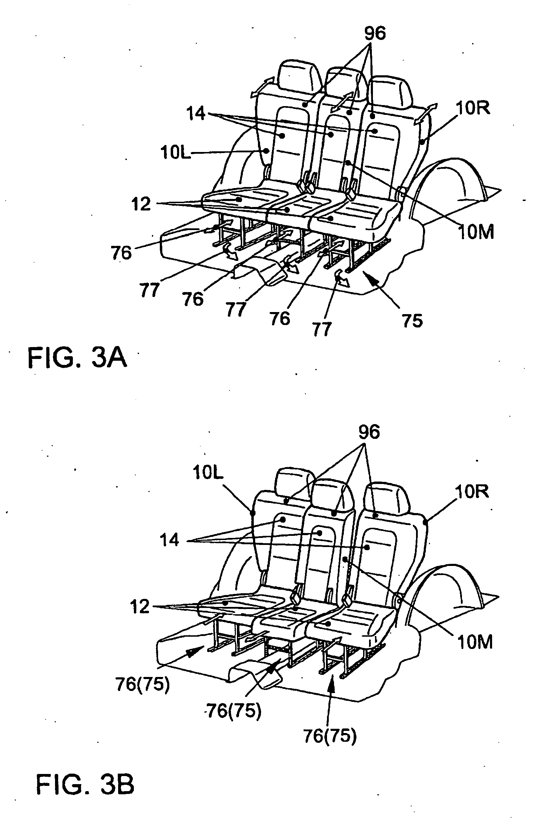

Figur 3A bis 3E zeigt perspektivische Ansichten und perspektivische Draufsichten auf eine weitere erfindungsgemäße Sitzanordnung mit einem Sitzunterbau als Sitzschienen-/Schwenk-Kombination 75/77 in verschiedenen Stellungen.

Die ebenfalls in eine tiefere Ausnehmung 90' bewegbare Sitzanordnung Figur 3A bis 3E weist einen linken, mittleren und einen rechten Kraftfahrzeugsitz 10L, 10M und 10R in einer Sitzreihe 100 auf.

Dabei besteht die Primärfunktion in der Neigungsverstellbarkeit durch eine nicht näher dargestellte Neigungsverstellungsvorrichtung 96 jedes Rückenlehnenteiles 14 als auch in der längsverschieblichen und reversiblen Verlagerung wenigstens eines Kraftfahrzeugsitz 10 (Rückenlehnenteil 14 und Sitzteil 12) auf einer ersten, im Wesentlichen horizontalen Ebene.

Figur 3B zeigt beispielhaft die Verschiebbarkeit des mittleren Sitzes 10M gegenüber dem linken beziehungsweise rechten Sitz 10L, 10R der Sitzanordnung. Selbstverständlich ist auch eine Verschiebbarkeit nur des linken oder des rechten Sitzes 10L, 10R beziehungsweise des mittleren Sitzes 10M gemeinsam mit dem linken oder rechten Sitz 10L, 10R der Sitzanordnung möglich.

Als Sekundärfunktion ist, wie Figur 3B zeigt, jeder Sitz der Sitzanordnung durch eine Schwenkvorrichtung 77 über mindestens eine quer zur Fahrtrichtung verlaufende Dreh/Klappachse 94 auf eine zweite horizontale Ebene auf den Karosserieboden 92 klappbar beziehungsweise schwenkbar. Vorzugsweise ist diese Klappung in die tiefere Ausnehmung 90' gemäß Figuren 1A bis 1E ausführbar, wodurch wiederum deutlich wird, dass gemäß der Erfindung eine Kombination von flach faltenden Sitzen und tiefer Anordnung des Sitzes in der Ausnehmung 90' durch die zuvor beschriebene Verlagerung des Tankes 20 und/oder anderer Bauteile in den Bereich der Hinterachse in Kombination besonders vorteilhaft ist.

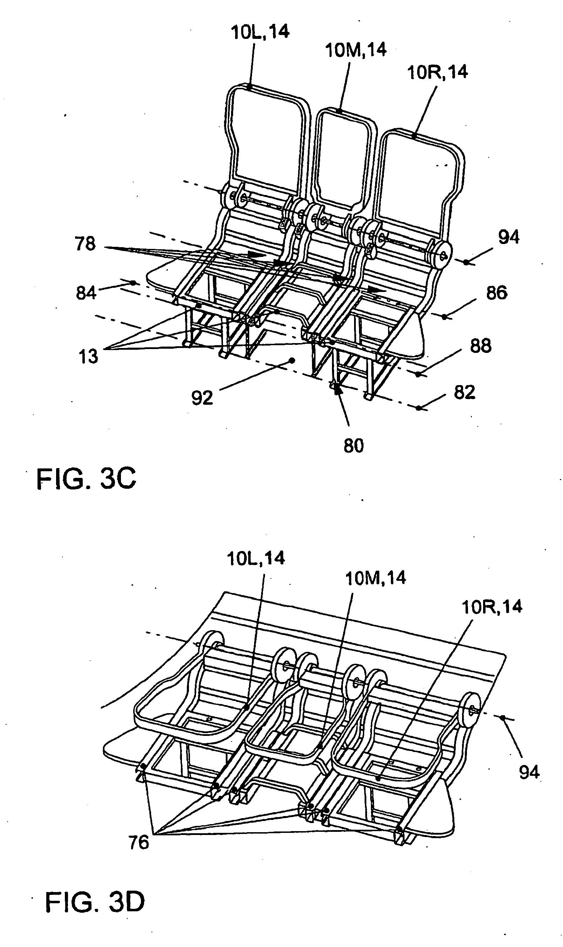

Die Sitzanordnung ist einerseits gekennzeichnet durch ein Schienensystem 75, mittels dem eine längsverschiebliche und reversible Verlagerung mindestens eines Sitzes 10L, 10M und 10R der Sitzanordnung auf einer ersten, im Wesentlichen horizontalen Ebene durchführbar ist. Das Schienensystem 75 weist, wie Figur 3D ferner zeigt, jeweils seitlich angeordnete Schienen 76 auf. Die Schienen 76 sind außerhalb des Sitzteil-Rahmens 13 angeordnet. Die Sitzteil-Rahmen 13 weisen jeweils eine Unterkonstruktion 80 jedes Sitzes 10L, 10M, 10R auf, die als eine Art Viergelenk auf einer ersten, zweiten, dritten und vierten Schwenkachse 80, 82, 84 und 86 schwenkbar angeordnet ist. Die Unterkonstruktion ist entweder innerhalb der Schienen am Sitzteil-Rahmen oder an den Schienen direkt außerhalb des Sitzteil-Rahmens angeordnet, wie aus Figur 3C und 3D ersichtlich ist.

Figur 3C zeigt eine Rahmenstruktur der drei Einzelsitze 10L, 10M, 10L der Sitzanordnung. Aus Figur 3C wird zunächst deutlich, dass in bevorzugter Ausgestaltung der Erfindung der linke beziehungsweise rechte Sitz 10L, 10R am Rahmen des Sitzteiles 13 an der Karosserie durch eine Verrastungsvorrichtung 78 angebracht ist. Des Weiteren wird sichtbar, dass der Sitzteil-Rahmen 13 des mittleren Sitzteiles 12 eine von dem linken und rechten Sitzteil 12 abweichende Form aufweist. Diese abweichende Form ist deshalb gewählt, weil - wie aus der Figur 3D sichtbar wird - der mittlere Sitz der Sitzanordnung in geklappter Stellung im Bereich des Mitteltunnels auf der Tunnelkontur 56 des Karosseriebodens 92 angeordnet ist.

Figur 3D zeigt weiter, dass die jeweils angeordneten zwei Sitzschienen 76 an jedem der drei Einzelsitze 10L, 10M, 10L, mit denen die reversible horizontale Verlagerung der Sitze 10L, 10M, 10L durchführbar ist, vorgesehen sind.

Die Sitzteilrahmenstruktur 13 zeigt die in Figur 3C ebenfalls in Rahmenstruktur dargestellte Schwenkvorrichtung 77, die als gelenkartige Unterkonstruktion 80 drehbar mit dem Karosserieboden 92 verbunden ist und eine erste Schwenkachse 82 auf dem Niveau des Karosseriebodens 92 ausbildet. Eine zweite Schwenkachse 84 bildet die Unterkonstruktion 80 im Bereich der Vorderkante direkt unterhalb des Sitzteil-Rahmens 13 aus, wodurch im vorderen Bereich die Schwenkbewegung über die erste und zweite Drehachse ausbildbar ist.

Die gelenkartige Unterkonstruktion ist im vorderen und hinteren Bereich eines jeden Sitzteiles ausgeführt, wodurch beim Schwenken oder Klappen eine höhere Stabilität erreicht wird und somit eine dritte und vierte Schwenkachse 86, 88 im hinteren oberen und unteren Bereich des Sitzes 10L, 10M und 10R ausgebildet wird. Dabei ist jeder Sitzteil-Rahmen 13 der Sitzanordnung mit vier gelenkartigen Verbindungselementen ausgestattet.

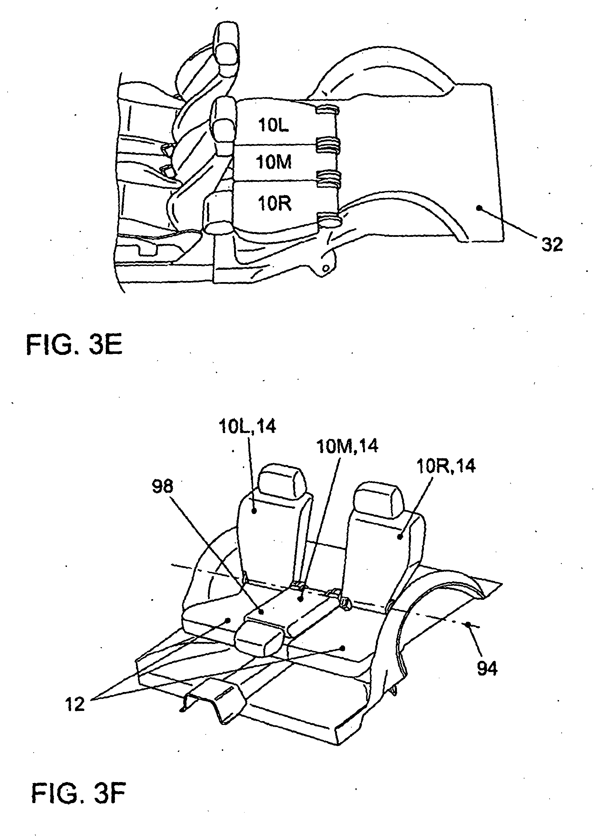

Durch Klappen der Rückenlehnenteile 14 auf die Sitzteile 12, vorheriges Lösen der Verrasterung 78 der Sitzteile 12 von der Karosserie und Klappen der Sitze durch die Schwenkvorrichtung 77 in vorzugsweise die tiefere Ausnehmung 90' des Karosseriebodens 92 ist der im Wesentlichen ebene Ladeboden, vorzugsweise der, durch die tiefere Ausnehmung 90', zweite Ladeboden 34 ausbildbar, wie Figur 3D in der Rahmenstruktur und Figur 3E als Draufsicht in der Polsterstruktur darstellt.

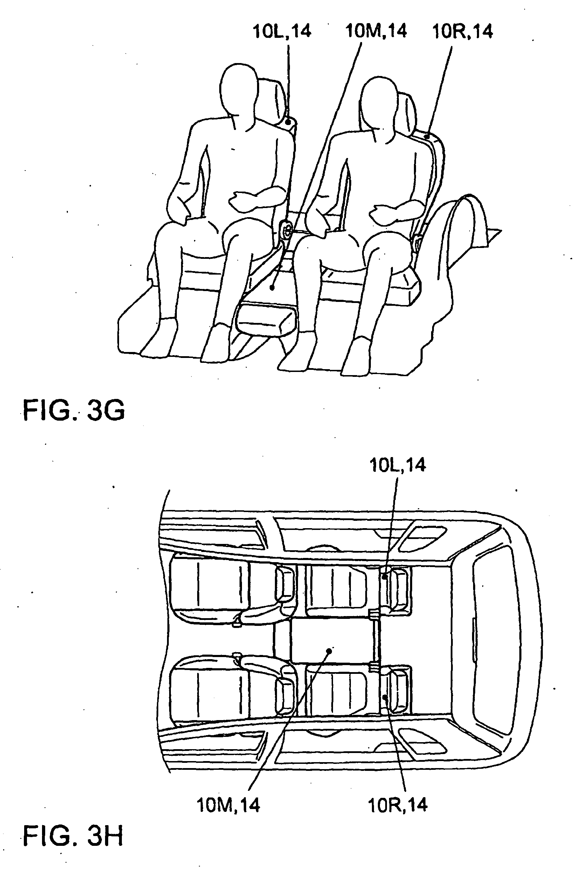

Figuren 3F, 3G und 3H zeigen zusätzliche Komfortfunktionen, die je nach Wahl ausführbar sind. Figur 3F zeigt eine einfache Klappung des Rückenlehnenteiles 14 um die Drehachse 94, wodurch eine Tischfunktion, ein Klapp-Tisch 98 mit Halterungen (Cupholder) für diverse Gegenstände, ausbildbar ist.

Figur 3G zeigt die Klappung des Rückenlehnenteiles 14 um die gleiche Drehachse 94 und Verschwenkung des mittleren Sitzes 10M in den Fußraum durch die bereits in den Figuren 3A bis 3E beschriebene Schwenkvorrichtung in den Bereich des Mitteltunnels, der als Tunnelkontur 56 dargestellt ist, auf den Karosserieboden 92. Durch diese Verschiebung des mittleren Sitzes 10M ist bei Nutzung der verbleibenden Sitzanordnung durch zwei Personen ein größerer Bewegungsfreiraum erzeugbar und - wie Figur 3H zeigt - eine tief liegende, auf mindestens einer Ebene mit dem Ladeboden des Kofferraumes befindliche Durchlademöglichkeit zwischen dem linken und rechten Sitz der Sitzanordnung möglich. Figur 3H zeigt diese Komfortvariante der Sitzanordnung für diverse Beladungsgegenstände, die in der Figur 3H aufgeführt sind. Selbstverständlich ist es auch möglich, den linken und/oder rechten Sitz 10L, 10R zu klappen und den mittleren Sitz 10M unverändert beizubehalten.

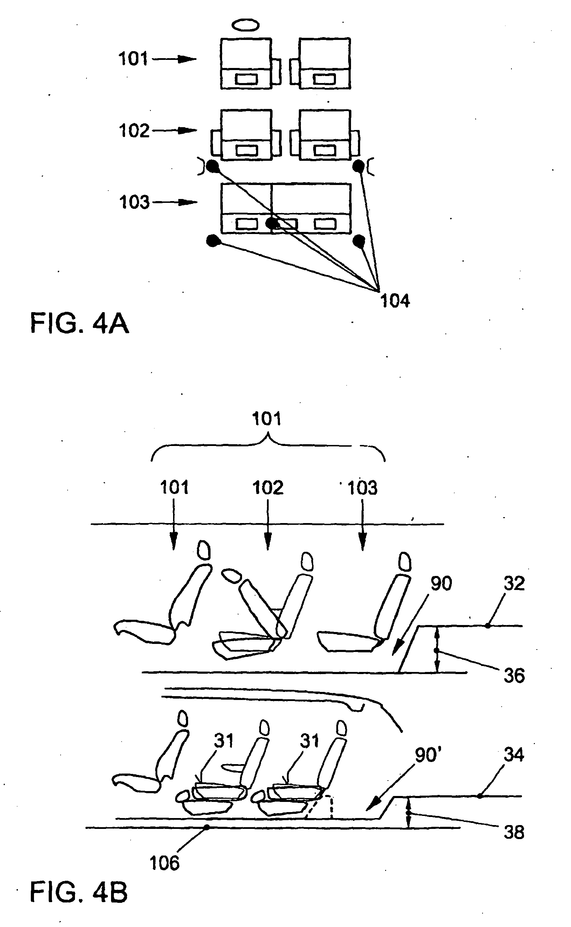

Figur 4A zeigt schließlich eine weitere Sitzanordnung für ein mehrsitziges Kraftfahrzeug mit mindestens drei Sitzreihen 100 (101, 102, 103), die ebenfalls in eine erfindungsgemäße tiefere Ausnehmung 90' klappbar ist. Figur 4A zeigt beispielsweise einen Kleintransporter oder einen Van mit an einer Karosserie befestigtem Fahrer- und Beifahrersitz und mindestens zwei dahinter angeordneten Sitzreihen 102 und 103, wobei jede Sitzeinheit ein Rückenlehnenteil 14 und ein Sitzteil 12 umfasst.

Erfindungsgemäß ist die zweite Sitzreihe 102 symmetrisch in zwei Sitzeinheiten unterteilt und die dritte Sitzreihe asymmetrisch in zwei, im Verhältnis von vorzugsweise zirka 1/3 zu 2/3 geteilten Sitzeinheiten dargestellt. Zudem zeigt Figur 4A die Anordnung der Gurtendbeschläge 104, die für die zweite Sitzreihe 102 an den äußeren Bereichen der Sitzeinheiten vorzugsweise an einer Konsole der Karosserie angeordnet sind. Die Gurtendbeschläge 104 für die asymmetrisch geteilte Sitzbank befinden sich ebenfalls jeweils an den äußeren Bereichen, vorzugsweise an den dort angeordneten Konsolen, und im Bereich der Fuge der asymmetrischen Teilung der Sitzanordnung ist ein weiterer Gurtendbeschlag 104 in den Sitz integriert.

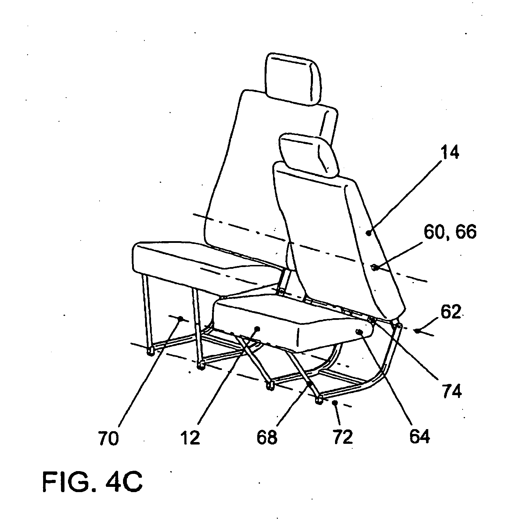

Die Figuren 4B und 4C zeigen, dass die jeweiligen Sitzeinheiten unabhängig von den anderen Sitzeinheiten durch reversible Klappung des Rückenlehnenteiles 14 und - wie Figur 4C zeigt - einer vorzugsweise zwischen Rückenlehnenteil 14 und Sitzteil 12 zwangsgekoppelten angeordneten Vorrichtung über einen Schwenkmechanismus ähnlich Figur 2A bis 2D auf einen Karosserieboden 92 unter Bildung einer im Wesentlichen ebenen Teil- oder Gesamtladefläche, vorzugsweise dem zweiten Ladeboden 34, in dem zweiten Abstand 38 von dem Fahrbahnniveau 106 flach faltend angeordnet sind. Auch für diese Sitzanordnung gilt, dass in Kombination mit der tieferen Ausnehmung 90' eine besonders tiefe Anordnung der Sitzeinheiten möglich ist, die mit dargestellten Schwenkmechanismus ausgerüstet sind.

Der Schwenkmechanismus der Figur 4C entspricht der Figur 2A bis 2D, jedoch ist die erste Drehachse 62 nicht karosseriefest drehbar angeordnet, sondern ist an einer mit dem vorderen Bein 68 verbundenen geschwungenen Sitzunterkonstruktion abgestützt. Die weiteren mit gleichen Bezugszeichen versehenen Teile des Sitzes entsprechen von der Ausbildung und Funktion her der Figur 2A bis 2D und werden deshalb nicht nochmals beschrieben.

### BEZUGSZEICHENLISTE

- 10: Kraftfahrzeugsitz
- 10L: linker Kraftfahrzeugsitz
- 10M: mittlerer Kraftfahrzeugsitz
- 10R: rechter Kraftfahrzeugsitz
- 12: Sitzteil
- 13: Sitzteil-Rahmen
- 14: Rückenlehnenteil
- 15: Rückenlehnenteil-Rahmen
- 16: Hinterkante-Felge
- 18: Hinterkante-Tank
- 20: Tank
- 22: Endschalldämpfer
- 24: Radhaus
- 25: Felge
- 26: Stoßfänger
- 27: Überhang
- 28: Tankeinfüllstützen
- 30: Kopfstütze
- 31: erste Fläche
- 32: erster Ladeboden
- 34: zweiter Ladeboden
- 36: erster Abstand
- 38: zweiter Abstand
- 40: Karosserie
- 42: Achsaufhängung
- 44: Hinterachse
- 46: Radlenker
- 48: Stoßdämpfer
- 50: Längsträger
- 52: Sitzquerträger
- 54: Fersenblech
- 56: Tunnelkontur
- 58: obere Lehnenverrastung
- 60: erster Befestigungspunkt
- 62: erste Drehachse
- 64: zweiter Befestigungspunkt
- 66: zweite Drehachse
- 68: vorderes Bein (Bügel)
- 70: dritte Drehachse
- 72: vierte Drehachse
- 74: Schwinge
- 75: Schienensystem
- 76: Schienen
- 77: Schwenkvorrichtung
- 78: Verrastung
- 80: Unterkonstruktion
- 82: erste Schwenkachse
- 84: zweite Schwenkachse
- 86: dritte Schwenkachse
- 88: vierte Schwenkachse
- 90: Ausnehmung
- 90': tiefere Ausnehmung
- 92: Karosserieboden
- 94: Klappachse
- 96: Neigungsverstellung
- 98: Klapp-Tisch
- 100: Sitzreihen
- 101: erste Sitzreihe
- 102: zweite Sitzreihe
- 103: dritte Sitzreihe
- 104: Gurtendbeschläge
- 106: Fahrbahnniveau

## Patentansprüche

1. Sitzanordnung für ein Kraftfahrzeug mit mindestens einem Kraftfahrzeugsitz (10), der ein Rückenlehnenteil (14) und ein Sitzteil (12) umfasst, der aus einer Gebrauchsstellung in eine Nichtgebrauchsstellung in eine Ausnehmung (90) eines Karosseriebodens (92) bewegbar ist, wodurch ein zu einem horizontalen Fahrbahnniveau (106) in einem ersten Abstand (36) angeordneter, im Wesentlichen ebener Gesamtladeboden aus einer ersten Fläche des Sitzteiles (12) oder des Rückenlehnenteiles (14) und einer im Wesentlichen ebenen Fläche eines ersten Ladebodens (32) in einem ersten Abstand (36) zu einem horizontalen Fahrbahnniveau (106) ausbildbar ist, **dadurch gekennzeichnet, dass**
• durch eine Anordnung von Bauteilen unterhalb des Karosseriebodens (92) in dem vor einem Crash gesicherten U-förmigen Bereich einer Hinterachse (44), der aus karosserieseitig angeordneten Längs- und Sitzquerträgem (50, 52) des Kraftfahrzeuges gebildet ist, mindestens ein flach faltender Kraftfahrzeugsitz (10) in seine Nichtgebrauchsstellung in eine, in einem Bereich des Karosseriebodens (92) ausbildbare tiefere Ausnehmung (90') klappbar ist,
• wodurch ein im Wesentlichen ebener Gesamtladeboden aus der dann tiefer angeordneten ersten horizontalen Fläche (31) des Sitzteiles (12) oder des Rückenlehnenteiles (14) und einem zweiten tieferen Ladeboden (34) in einem zweiten geringeren Abstand (38) zu dem horizontalen Fahrbahnniveau (106) ausbildbar ist.

2. Sitzanordnung nach Anspruch 1, **dadurch gekennzeichnet, dass** die in den gesicherten Bereich der Hinterachse (44) des Kraftfahrzeuges verlegten Bauteile ein Tank (20) und/oder ein Endschalldämpfer (22) sind.

3. Sitzanordnung nach Anspruch 1, **dadurch gekennzeichnet, dass** die Hinterachse (44) eine Art Verbundlenker ist, der die Hinterachse (44) selbst und in eine Felge (25) eingreifende seitliche Radlenker (46) umfasst, wobei die Radlenker (46) an der der Felge (25) gegenüberliegenden Seite durch Achsaufhängungen (42) an der Karosserie befestigt sind, so dass durch den Verbundlenker unterhalb der Karosserie (92) der crashsichere Bereich in der Form eines "U" ausbildbar ist.

4. Sitzanordnung nach Anspruch 1 bis 3, **dadurch gekennzeichnet, dass** eine Hinterkante-Felge (16) und ein Hinterkante-Tank (18) in einer Flucht angeordnet sind, wodurch crashbedingte Kräfte über die Hinterkante-Felge (16) in den Verbundlenker eingeleitet werden und die Bauteile (20, 22) vor Deformation schützen.

5. Sitzanordnung nach Anspruch 1 und 3, **dadurch gekennzeichnet, dass** der Verbundlenker (42, 44, 46) im Wesentlichen unterhalb des Sitzquerträgers (52) angeordnet ist, wobei der Verbundlenker (42, 44 , 46) über die Achsaufhängung (42) mit dem Längsträger (50) in Verbindung steht, wodurch der karosserieseitige, crashsichere Bereich ebenfalls in Form eines "U", welcher mit einem Stoßfänger (26) abgeschlossen ist, für die angeordneten Bauteile (20, 22) ausbildbar ist.

6. Sitzanordnung nach Anspruch 1, **dadurch gekennzeichnet, dass** ein Fersenblech (54) in der tieferen Ausnehmung (90') des Karosseriebodens (92) im Fahrzeug weiter hinter anordbar ist, als in der Ausnehmung (90).

7. Sitzanordnung nach Anspruch 1, **dadurch gekennzeichnet, dass** ein in der tieferen Ausnehmung (90') des Karosserieboden (92) angeordneter Mitteltunnel ausgeführt ist.

8. Sitzanordnung nach Anspruch 7, **dadurch gekennzeichnet, dass** der Mitteltunnel eine in der Höhe reduzierte Tunnelkontur (56) aufweist.

## Claims

1. Seat arrangement for an automotive vehicle with at least one automotive vehicle seat (10) which comprises a backrest part (14) and a seat part (12) which is moveable out of a use position into a not-in-use position in a recess (90) of a body floor (92), as a result of which a substantially flat overall loading floor arranged at a first distance (36) from a horizontal carriageway level (106) can be formed from a first surface of the seat part (12) or of the backrest part (14) and a substantially flat surface of a first loading floor (32) at a first distance (36) from a horizontal carriageway level (106), **characterized in that**
• by means of components being arranged under the body floor (92) in the U-shaped region of a rear axle (44), which region is protected from a crash and is formed from longitudinal members and seat cross-members (50, 52), which are arranged in the body side, of the automotive vehicle, at least one automotive vehicle seat (10) which folds flat can be folded into its not-in-use position in a deeper recess (90') which can be formed in a region of the body floor (92),
• as a result of which a substantially flat overall loading floor can be formed from the first horizontal surface (31) of the seat part (12) or of the backrest part (14), which surface is then arranged at a deeper point, and from a second, deeper loading floor (34) at a second smaller distance (38) from the horizontal carriageway level (106).

2. Seat arrangement according to Claim 1, **characterized in that** the components placed into the protected region of the rear axle (44) of the automotive vehicle are a tank (20) and/or an end silencer (22).

3. Seat arrangement according to Claim 1, **characterized in that** the rear axle (44) is a type of twist-beam rear axle which comprises the rear axle (44) itself and lateral wheel links (46) which engage in a rim (25), the wheel links (46) being fastened on the side opposite the rim (25) to the body by means of axle-suspension means (42) such that the twist-beam rear axle enables the crash-protected region below the body (92) to be formed in the shape of a "U".

4. Seat arrangement according to Claims 1 to 3, **characterized in that** a rear edge rim (16) and a rear edge tank (18) are aligned, as a result of which crash-induced forces are introduced via the rear edge rim (16) into the twist-beam rear axle and protect the components (20, 22) against deformation.

5. Seat arrangement according to Claims 1 and 3, **characterized in that** the twist-beam rear axle (42, 44, 46) is substantially arranged below the seat cross member (52), the twist-beam rear axle (42, 44, 46) being connected to the longitudinal member (50) via the axle-suspension means (42), as a result of which the crash-protected region on the body side can likewise be formed in the shape of a "U", which is closed by a bumper (26), for the components (20, 22) arranged there.

6. Seat arrangement according to Claim 1, **characterized in that** a heel plate (54) can be arranged further to the rear in the deeper recess (90') of the body floor (92) in the vehicle than in the recess (90).

7. Seat arrangement according to Claim 1, **characterized in that** a centre tunnel arranged in the deeper recess (90') of the body floor (92) is realised.

8. Seat arrangement according to Claim 7, **characterized in that** the centre tunnel has a height-reduced tunnel contour (56).

## Revendications

1. Disposition de siège pour un véhicule automobile avec au moins un siège de véhicule automobile (10) qui comprend une partie de dossier (14) et une partie de siège (12), qui peut être déplacée d'une position d'utilisation dans une position de non utilisation dans un évidement (90) d'un plancher de carrosserie (92), un plancher de chargement global pour l'essentiel plan, disposé à une certaine distance (36) d'un niveau de chaussée (106) horizontal, pouvant être réalisé à partir d'une première surface de la partie de siège (12) ou de la partie de dossier (14) et d'une surface pour l'essentiel plane d'un premier plancher de chargement (32) à une première distance (36) d'un niveau de chaussée (106) horizontal, **caractérisée en ce que**
une disposition d'éléments est formée en dessous du plancher de carrosserie (92) dans la zone en U sécurisée contre les chocs d'un essieu arrière (44), formé de barres transversales de siège (50, 52) disposées du côté longitudinal et du côté de la carrosserie du véhicule automobile, au moins un siège de véhicule automobile (10) plat en position repliée pouvant être rabattu dans sa position de non utilisation dans un évidement (90') plus profond pouvant être réalisé dans une zone du plancher de carrosserie (92) ;
un plancher de chargement global pour l'essentiel plan pouvant être réalisé à partir de la première surface (31) horizontale disposée ensuite plus en profondeur de la partie de siège (12) ou de la partie de dossier (14) et d'un second plancher de chargement (34) disposé plus en profondeur à une seconde distance (38) plus limitée par rapport au niveau de chaussée (106) horizontal.

2. Disposition de siège selon la revendication 1, **caractérisée en ce que** les composants disposés dans la zone sécurisée de l'essieu arrière (44) du véhicule automobile sont un réservoir (20) et/ou un amortisseur final de bruit (22).

3. Disposition de siège selon la revendication 1, **caractérisée en ce que** l'essieu arrière (44) est une sorte de bras de liaison qui comprend l'essieu arrière (44) lui-même et un volant de roue (46) latéral s'emboîtant dans une jante (25), le volant de roue (46) étant fixé au niveau du côté opposé à la jante (25) par des suspensions d'essieu (42) au niveau de la carrosserie, de sorte que la zone sécurisée contre les chocs peut être réalisée en forme de « U » à travers le bras de liaison, en dessous de la carrosserie (92).

4. Disposition de siège selon la revendication 1 à 3, **caractérisée en ce qu'**une jante de bord arrière (16) et un réservoir de bord arrière (18) sont disposés en alignement, les forces induites par un choc dans la jante de bord arrière (16) étant amorcées dans le bras de liaison et les composants (20, 22) servant de protection contre la déformation.

5. Disposition de siège selon la revendication 1 et 3, **caractérisée en ce que** le bras de liaison (42, 44, 46) est disposé pour l'essentiel en dessous de la barre transversale de siège (52), le bras de liaison (42, 44, 46) étant relié à la barre longitudinale (50) par l'intermédiaire de la suspension d'essieu (42), la zone sécurisée contre les chocs côté carrosserie prenant également une forme en « U » rattachée à un pare-choc (26) pour les éléments (20, 22).

6. Disposition de siège selon la revendication 1, **caractérisée en ce qu'**une tôle de talon (54) peut être disposée plus en arrière dans le véhicule dans un évidement (90') plus profond du plancher de carrosserie (92) que l'évidement (90).

7. Disposition de siège selon la revendication 1, **caractérisée en ce qu'**un tunnel médian disposé dans un évidement (90') plus profond du plancher de carrosserie (92) est réalisé.

8. Disposition de siège selon la revendication 7, **caractérisée en ce que** le tunnel médian comporte un contour de tunnel (56) réduit en hauteur.
